# EUROPÄISCHE PATENTANMELDUNG

(11) **EP 4 508 970 A1**
(43) Veröffentlichungstag der Anmeldung: **19.02.2025**
(21) Anmeldenummer: 24182873.0
(22) Anmeldetag: 18.06.2024
(51) Int. Cl.: A01D 41/127, G05B 13/04

(54) **LANDWIRTSCHAFTLICHE ARBEITSMASCHINE MIT FAHRERASSISTENZSYSTEM**

(30) Priorität: 17.08.2023 DE 102023122014
(71) Anmelder: CLAAS Selbstfahrende Erntemaschinen GmbH, 33428 Harsewinkel (DE)
(72) Erfinder: Wilken, Andreas, 49143 Bissendorf (DE); Bormann, Bastian, 33334 Gütersloh (DE); Kösters, Tarek, 50735 Köln (DE); Domnik, Matthias, 59302 Oelde (DE); Nelles, Oliver, 57250 Netphen-Herzhausen (DE)
(74) Vertreter: CLAAS 365FarmNet GmbH

(57) **Zusammenfassung**

Die Erfindung betrifft eine landwirtschaftliche Arbeitsmaschine (1) ein Fahrerassistenzsystem (45) umfassend, welches vorgesehen und eingerichtet ist Arbeitsparameter (44, 50a..i) und Qualitätsparameter (49,49a) der landwirtschaftlichen Arbeitsmaschine (1) automatisiert zu überwachen und einzustellen, wobei dem Fahrerassistenzsystem (45) ein Kennlinienfelder (48) umfassendes Prozessmodell (47) zugeordnet ist und das vom Fahrerassistenzsystem (45) umgesetzte Optimierungsverfahren (65) als Kennfeldsteuerung (69) ausgebildet ist und das Optimierungsverfahren (65) als Stellgröße (51) optimierte Arbeitsparameter (44, 50a..i) generiert und das Fahrerassistenzsystem (45) in Abhängigkeit der optimierten Arbeitsparameter (44, 50a..i) die Qualitätsparameter (49,49a) der landwirtschaftlichen Arbeitsmaschine (1) ermittelt, wobei das Prozessmodell (47) als dynamisches nichtlineares Prozessmodell (59) in der Weise ausgebildet ist, dass das dynamische nichtlineare Prozessmodell (59) einen statischen Prozessmodellanteil (60) und einen dynamischen Prozessmodellanteil (61) umfasst, wobei zumindest die Stellgrößen (51) im statischen Prozessmodellanteil (60) einen Optimierungsschritt (52) und im dynamischen Prozessmodellanteil (61) eine Regelkreisstruktur (62) durchlaufen.

## Beschreibung

Die Erfindung betrifft eine landwirtschaftliche Arbeitsmaschine ein Fahrerassistenzsystem umfassend nach dem Oberbegriff des Anspruchs 1.

Fahrerassistenzsysteme, welche die Arbeitsweise von landwirtschaftlichen Arbeitsmaschinen, insbesondere Erntemaschinen, optimieren und dabei den Bediener der landwirtschaftlichen Arbeitsmaschine weitgehend von Überwachungs- und Einstellaufgaben entlasten sind im Stand der Technik bereits umfassend beschrieben. Aus der DE 10 2010 017 687 A1 ist ein Fahrerassistenzsystem bekannt geworden, welches optimierte Einstellparameter der Arbeitsorgane einer landwirtschaftlichen Erntemaschine kennfeldbasiert ermittelt. Das hier offenbarte Verfahren nähert sich in einem iterativen Prozess optimierten Arbeitsparametern an. Derartige Systeme sind gut geeignet bei mehr oder weniger homogenen Erntebedingungen schnell optimierte Arbeitsparameter der Erntemaschine zu ermitteln. Bei sich schnell ändernden Erntebedingungen haben derartige Verfahren den Nachteil, dass Aufgrund der Trägheit des Optimierungsverfahrens ein bestimmter Einschwingprozess durchlaufen werden muss bis die Erntemaschine wieder in einem optimierten Arbeitspunkt arbeitet.

Im Stand der Technik wurde auch schon erkannt, dass die Qualität des genutzten Kennfeldes maßgeblichen Einfluss auf das jeweilige Optimierungsergebnis hat. So wurde beispielsweise in der EP 2 687 922 A2 vorgeschlagen, bestimmte außerhalb des aktuellen Arbeitsbereichs liegende Arbeitspunkte des Kennfeldes gezielt anzufahren, um das Kennfeld in einem großen Bereich des Gesamtkennfeldes aktualisiert zu halten. Dies hat insbesondere den Effekt, dass die das Kennfeld bestimmenden mathematischen Zusammenhänge so angepasst werden, dass das Ermitteln optimierter Arbeitsparameter beschleunigt wird. Nachteilig ist bei derartigen Verfahren jedoch der zusätzliche Aufwand für die gezielte Ansteuerung nicht im gegenwärtigen Arbeitsfeld liegender Arbeitspunkte.

Um ein zur Optimierung von Arbeitsparametern einer landwirtschaftlichen Arbeitsmaschine, insbesondere Mähdrescher, genutztes Kennfeld zu befähigen schnell optimierte Arbeitsparameter zu ermitteln ist es gemäß EP 4 154 699 A1 aus dem Stand der Technik auch bekannt einem Kennfeld eine sogenannte Steuerkennlinie zuzuordnen, die über einen großen Bereich des Kennfeldes die jeweils optimalen Arbeitspunkte zusammenfasst und das Assistenzsystem den Prozess der Parameteroptimierung entlang dieser Optimal-Kennlinie steuert. Dies hat insbesondere den Vorteil, dass mittels dieser kennfeldbasierten Optimierung schneller die jeweils optimalen Arbeitspunkte erreicht werden. Nachteil bleibt hier, dass auf abrupte Änderungen in den Erntebedingung mit einer verbleibenden Trägheit reagiert wird, da das Optimierungssystem zunächst den an der Steuerkennlinie ausgerichteten neuen optimalen Arbeitspunkt ansteuern muss.

Es ist deshalb Aufgabe der Erfindung die beschriebenen Nachteile des Standes der Technik zu vermeiden und insbesondere ein Fahrerassistenzsystem zu schaffen, welches sich schnell an die realen Erntebedingungen anpasst und insbesondere schnell auf abrupte Änderungen der Erntebedingungen reagiert.

Diese Aufgabe wird erfindungsgemäß durch eine landwirtschaftliche Arbeitsmaschine mit den kennzeichnenden Merkmalen des Anspruchs 1 gelöst.

Indem die landwirtschaftliche Arbeitsmaschine ein Fahrerassistenzsystem umfasset, welches vorgesehen und eingerichtet ist Arbeitsparameter und Qualitätsparameter der landwirtschaftlichen Arbeitsmaschine automatisiert zu überwachen und einzustellen, wobei dem Fahrerassistenzsystem ein Kennlinienfelder umfassendes Prozessmodell zugeordnet ist, sodass das vom Fahrerassistenzsystem umgesetzte Optimierungsverfahren als Kennfeldsteuerung ausgebildet ist und das Optimierungsverfahren als Stellgröße optimierte Arbeitsparameter generiert und das Fahrerassistenzsystem in Abhängigkeit der optimierten Arbeitsparameter die Qualitätsparameter der landwirtschaftlichen Arbeitsmaschine ermittelt und das Prozessmodell als dynamisches nichtlineares Prozessmodell in der Weise ausgebildet ist, dass das dynamische nichtlineare Prozessmodell einen statischen Prozessmodellanteil und einen dynamischen Prozessmodellanteil umfasst, wobei zumindest die Stellgrößen im statischen Prozessmodellanteil einen Optimierungsschritt und im dynamischen Prozessmodellanteil eine Regelkreisstruktur durchlaufen wird sichergestellt, dass das Fahrerassistenzsystem die Optimierung der Arbeitsparameter schnell an sich ändernde Prozessbedingungen, sich abrupt ändernde Erntebedingungen, anpassen kann.

In einer vorteilhaften Ausgestaltung der Erfindung ist die von dem Prozessmodell definierte Kennfeldsteuerung eingerichtet und ausgebildet die Arbeitsparameter der landwirtschaftlichen Arbeitsmaschine und Grenzwerte für die Regelkreisstruktur vorzugeben, wobei der Regelkreisstruktur ein selbsteinstellender Regler zugeordnet ist und der selbsteinstellende Regler vorgesehen und eingerichtet ist die Qualitätsparameter des Prozesses zu überwachen. Die hat insbesondere den Effekt, dass die Arbeitsweise der landwirtschaftlichen Arbeitsmaschine stets in einem optimalen Betriebspunkt betrieben wird.

In einer weiteren vorteilhaften Ausgestaltung der Erfindung bilden der Optimierungsschritt und die Regelkreisstruktur ein Optimierungsverfahren, welches dazu vorgesehen und eingerichtet ist das Prozessmodell in einem Modelladaptionsschritt in der Weise zu betreiben, dass der dynamische nichtlineare Prozessmodellanteil vorgesehen und eingerichtet ist, aus der Überwachung der Qualitätsparameter und unter Verwendung eines Parameterschätzverfahrens den stationären Modellanteil des Prozesses zu ermitteln, wobei die eine oder mehreren, die optimierten Arbeitsparameter umfassenden Stellgrößen und der eine oder die mehreren von der jeweiligen Stellgröße abhängigen Qualitätsparameter Eingangsgrößen des Optimierungsverfahrens bilden. Dies hat insbesondere den Effekt, dass die Prozessoptimierung auf die wesentlichen Parameter beschränkt ist, sodass die erforderliche Rechenleistung, auf ein Maß beschränkt werden kann, welches die Anwendung des Optimierungsverfahrens in einem laufenden Erntebetrieb ermöglicht.

Indem im Optimierungsschritt aus den vom Prozessmodell abgeleiteten Stellgrößen und vorgegebenen Qualitätsparameter optimierte Stellgrößen ermittelt werden, wird in einer vorteilhaften Ausgestaltung der Erfindung zunächst sichergestellt, dass die den realen Prozess beschreibenden Arbeitsparameter in dem gesamten Optimierungsprozess hinreichend berücksichtigt werden.

Indem die den selbsteinstellenden Regler umfassende Regelkreisstruktur , als Eingangsgrößen die im Optimierungsschritt optimierten Stellgrößen, die vorgegebenen Qualitätsparameter und die in Abhängigkeit von den optimierten Stellgrößen ermittelten Qualitätsparameter sind und dass der selbsteinstellende Regler weiter vorgesehen und eingerichtet ist, aus einem Vergleich der vorgegebenen Qualitätsparameter mit den ermittelten Qualitätsparametern optimierte Stellgrößen abzuleiten und an den Prozess und den Modelladaptionsschritt der dynamischen Modelladaption zu übergeben werden mehrere Effekte erzielt. Einerseits lässt sich auf einfache Weise feststellen, wann abrupte Änderungen der Erntebedingungen eingetreten sind, denen die übliche kennfeldbasierte Regelung nicht in adäquater Weise folgen kann. Zudem wird sichergestellt, dass die von der Regelkreisstruktur ermittelten optimierten Parameter auch dem hinterlegten Prozessmodel zugeführt werden, sodass dieses schrittweise so adaptiert wird, dass es die geänderten Bedingungen des Prozesses hinreichend genau beschreibt.

In diesem Zusammenhang ist es von Vorteil, wenn auch der ermittelte Qualitätsparameter als Eingangsgröße an den Modelladaptionsschritt übergeben wird, sodass die geänderten Prozessbedingungen hinreichend genau bei der Modelladaption berücksichtigt werden können.

Das Fahrerassistenzsystem kann dann hinreichend schnell die Arbeitsweise der landwirtschaftlichen Arbeitsmaschine optimieren, wenn das Fahrerassistenzsystem in einer vorteilhaften Weiterbildung eingerichtet ist die optimierten Stellgrößen automatisiert an den Arbeitsorganen der landwirtschaftlichen Arbeitsmaschine einzustellen.

Eine schnelle Verbesserung der Arbeitsweise der landwirtschaftlichen Arbeitsmaschine bei sich abrupt ändernden Erntebedingungen wird in einer vorteilhaften Ausgestaltung der Erfindung dadurch erreicht, dass die Regelkreisstruktur vorgesehen und eingerichtet ist, eine dynamische Anpassung des Prozesses zu bewirken bevor das hinterlegte Prozessmodell dem Prozess nachgeführt wurde.

Eine besonders effiziente Optimierung der Arbeitsweise der landwirtschaftlichen Arbeitsmaschine ergibt sich in einer weiteren vorteilhaften Ausgestaltung dann, wenn das nichtlineare dynamische Prozessmodell den Zusammenhang von Arbeitsparametern eines Arbeitsorgans und den Qualitätsparametern beschreibt.

Eine mathematisch einfach abbildbare Überprüfung des die aktuelle Arbeitsweise der landwirtschaftlichen Arbeitsmaschine beschreibenden Qualitätsparameters ergibt sich in einer vorteilhaften Ausgestaltung der Erfindung dadurch, dass die den Qualitätsparametern zugeordneten Grenzwerte so strukturiert sind, dass in einem Prüfschritt festgestellt wird, ob der erreichte Qualitätsparameter noch innerhalb des für den Qualitätsparameter definierten Grenzwertes liegt oder nicht, wobei bei Überschreiten des Grenzwertes die Regelkreisstruktur aktiviert wird und die Aktivierung der Regelkreisstruktur dann unterbleibt oder beendet wird, wenn der Grenzwert nicht oder nicht mehr überschritten ist.

In einer weiteren vorteilhaften Ausgestaltung ist vorgesehen, dass die Regelkreisstruktur solange aktiviert bleibt, bis die aus dem nichtlinearen dynamischen Modell abgeleiteten optimierten Arbeitsparameter die Qualitätskriterien des Prozesses erfüllen. Auf diese Weise wird sichergestellt, dass auch während der Nachführung des Prozessmodells an die realen Prozessbedingungen die Arbeitsweise der landwirtschaftlichen Arbeitsmaschine gemäß der gewählten Ernteprozessstrategie erhalten bleibt.

Eine besonders effiziente prozessmodell-basierte Regelung der Arbeitsweise einer landwirtschaftlichen Arbeitsmaschine wird in einer vorteilhaften Weiterbildung der Erfindung dann erreicht, wenn die Arbeitsorgane der landwirtschaftlichen Arbeitsmaschine zu Prozessaggregatautomaten zusammengefasst sind und ein oder mehrere Arbeitsorgane zusammen mit dem Fahrerassistenzsystem einen Prozessaggregatautomat bilden, wobei in einer dem Fahrerassistenzsystem zugeordneten Speichereinheit den jeweiligen Prozessaggregatautomat beschreibende Prozessmodelle hinterlegt sind und die Recheneinheit dazu vorgesehen und eingerichtet ist mittels der hinterlegten Prozessmodelle den Prozessaggregatautomat zu betreiben und der Prozessaggregatautomat eingerichtet ist, Arbeitsparameter des oder der Arbeitsorgane zu optimieren und die optimierten Arbeitsparameter dem jeweiligen Arbeitsorgan vorzugeben. In diesem Zusammenhang ist es von Vorteil, wenn die landwirtschaftliche Arbeitsmaschine als Mähdrescher ausgeführt ist und der Prozessaggregatautomat zumindest als Dreschautomat und/oder als Abscheideautomat und/oder als Reinigungsautomat ausgebildet ist und jedem dieser Prozessaggregatautomaten ein Prozessmodell zugeordnet ist.

Um die Rechenleistung zu optimieren und die Optimierungszeit zu verkürzen ist in einer weiteren vorteilhaften Ausgestaltung vorgesehen, dass zumindest dem Dreschautomat und dem Abscheideautomat ein gemeinsames Prozessmodell zugeordnet ist, vorzugsweise dem Dreschautomat und dem Abscheideautomat und dem Reinigungsautomat ein gemeinsames Prozessmodell zugeordnet ist. Dies hat vor allem den Effekt, dass mit Reduzierung der anzuwendenden kennfeldbasierten Modelle die erforderliche Rechenleistung signifikant abnimmt.

In einer weiteren vorteilhaften Ausgestaltung der Erfindung ist vorgesehen, dass das dynamische nichtlineare Prozessmodell, vorzugsweise der dynamische Prozessmodellanteil als selbstlernendes Prozessmodell ausgebildet ist und das Parameterschätzverfahren vorzugsweise von einem sogenannten LMN-FIR Modell (Local Model Networks with local Finite Impulse Response Models) gebildet wird. Diese Modell haben sich bereits bewährt und sind gut in Optimierungsroutinen integrierbar, insbesondere sind sie in landwirtschaftlichem Kontext gut an Fruchtartbedingungen und unterschiedliche Arbeitsmaschinentypen anpassbar.

Die komplexen in einer als Mähdrescher ausgeführten landwirtschaftlichen Arbeitsmaschine ablaufenden Prozesse lassen sich dann prozessmodell-basiert besonders effizient abbilden und in eine entsprechend effiziente Optimierung der Arbeitsweise eines Mähdrescher überführen, wenn in einer vorteilhaften Ausgestaltung der Erfindung das Optimierungsverfahren in das der landwirtschaftlichen Arbeitsmaschine zugeordnete Fahrerassistenzsystem integriert ist, wobei das jeweilige Prozessmodell in einer der die Recheneinheit aufnehmenden Steuer- und Regeleinrichtung zugeordneten Speichereinheit des Fahrerassistenzsystems hinterlegt ist, sodass die Recheneinheit dazu vorgesehen und eingerichtet ist mittels des hinterlegten Prozessmodells das Optimierungsverfahren zu betreiben und das Fahrerassistenzsystem weiter eingerichtet ist
a.) mittels geeigneter Sensorsysteme die Arbeitsparameter und zugehörigen Stellgrößen zu ermitteln und an das Optimierungsverfahren zu übergeben
b.) das Optimierungsverfahren in einem Modelladaptionsschritt das nichtlineare dynamische Prozessmodell adaptiert und sodann den statischen Prozessmodellanteil ableitet
c.) mittels des abgeleiteten statischen Prozessmodellanteils und den vom Bediener der landwirtschaftlichen Arbeitsmaschine vorgebbaren Qualitätsparametern sodann die optimierten Arbeitsparameter ermittelt werden
d.) die ermittelten optimierten Arbeitsparameter werden an die Regelkreisstruktur übergeben und auf Basis der übergebenen Arbeitsparameter und den übergebenen Qualitätsparametern werden optimierte Arbeitsparameter ermittelt
e.) die optimierten Arbeitsparameter werden sodann an den Arbeitsorganen der landwirtschaftlichen Arbeitsmaschine eingestellt und die sich ergebenden Qualitätskriterien des Prozesses P werden ermittelt
f.) sodann werden die ermittelten Qualitätsparameter mit den vordefinierten Qualitätsparameters in einem Prüfschritt in Abhängig eines Grenzwertes verglichen, wobei bei Überschreiten des Grenzwertes die Regelkreisstruktur aktiviert wird und die Aktivierung der Regelkreisstruktur dann unterbleibt oder beendet wird, wenn der Grenzwert nicht oder nicht mehr überschritten ist.
g.) und bei aktivierter Regelkreisstruktur werden die von der Regelkreisstruktur ermittelten Arbeitsparameter dem jeweiligen Arbeitsorgan vorgegeben.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht der landwirtschaftlichen Arbeitsmaschine mit erfindungsgemäßem Fahrerassistenzsystem
- Figur 2: Details einer aus dem Stand der Technik bekannt prozessmodell-basierten Optimierung von Arbeitsparametern der landwirtschaftlichen Arbeitsmaschine
- Figur 3: Details der erfindungsgemäßen prozessmodell-basierten Optimierung von Arbeitsparametern der landwirtschaftlichen Arbeitsmaschine
- Figur 4: eine Ausgestaltungsvariante der erfindungsgemäßen prozessmodell-basierten Optimierung von Arbeitsparametern der landwirtschaftlichen Arbeitsmaschine nach Figur 3.

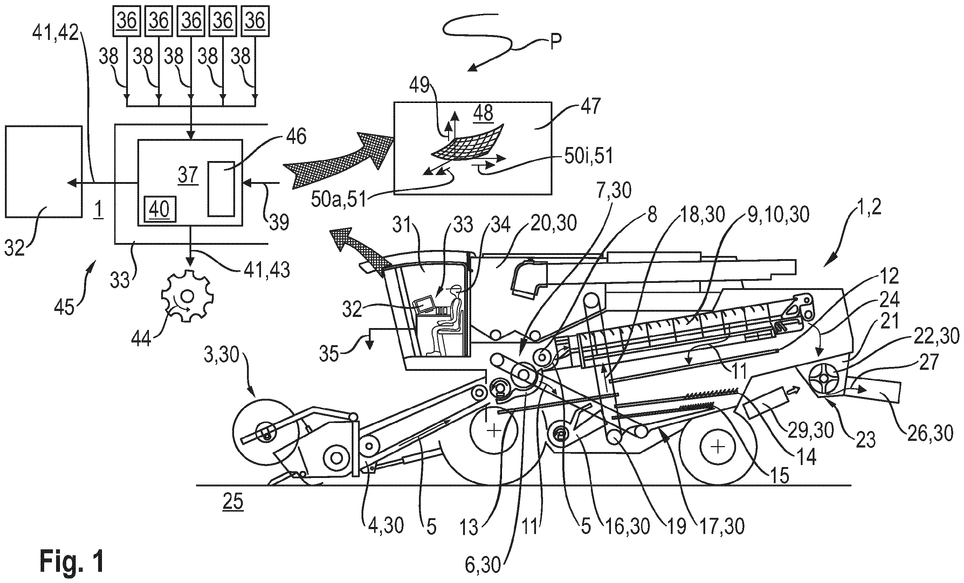

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Abscheiderotoranordnung 9 ausgeführte Trenneinrichtung 10 übergeben wird. Es liegt im Rahmen der Erfindung, dass die Trenneinrichtung 10 auch als an sich bekannter und deshalb nicht dargestellter Hordenschüttler ausgeführt sein kann. Auch liegt es im Rahmen der Erfindung, dass die Trenneinrichtung ein- oder zweirotorig ausgeführt sein kann oder die Dreschorgane 7 und die Trenneinrichtung 10 zu einer ein- oder zweirotorigen Axialflussdresch- und Trenneirichtung zusammengefasst sind. In der Trenneinrichtung 10 wird der Erntegutstrom 5 so gefördert, dass in dem Gutstrom 5 enthaltene freibewegliche Körner 11 im untenseitigen Bereich der Trenneinrichtung 10 abgeschieden werden. Sowohl die am Dreschkorb 6 als auch in der Trenneinrichtung 10 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom 18 wird schließlich mittels Elevatoren 19 an einen Korntank 20 übergeben.

Im rückwärtigen Bereich der Trenneinrichtung 10 ist dieser im dargestellten Ausführungsbeispiel eine von einem trichterförmigen Gehäuse 21 ummantelte, als Strohhäcksler 22 ausgeführte Zerkleinerungseinrichtung 23 zugeordnet. Dem Strohhäcksler 22 wird obenseitig das die Trenneinrichtung 10 im rückwärtigen Bereich verlassende Stroh 24 zugeführt. In nicht dargestellter Weise kann das Stroh 24 nach der Trenneinrichtung 10 auch so umgelenkt werden, dass es direkt auf dem Boden 25 in einem Schwad abgelegt wird. Im Austrittsbereich des Strohhäckslers 22 wird der aus dem zerkleinerten Stroh 24 bestehende Gutstrom und die in der Reinigungseinrichtung 17 abgeschiedenen Nichtkornbestandteile an eine Gutverteileinrichtung 26 übergeben, welche den Restmaterialstrom 27 so abgibt, dass es zu einer Breitverteilung des Restmaterialstroms 27 auf dem Boden 25 kommt. Im hier dargestellten Ausführungsbeispiel wird der in der Reinigungseinrichtung 17 abgeschiedenen Restmaterialstrom 28 mittels eines sogenannten Spreuverteilers 29 in den Strohhäcksler 22 abgegeben und dort letztlich als gemeinsamer Restmaterialstrom 27 mittels der Gutverteileinrichtung 26 aus dem Mähdrescher 12 gefördert. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18, der Korntank 20, der Strohhäcksler 22, die Gutverteileinrichtung 26 und der Spreuverteiler 29 als Arbeitsorgane 30 der landwirtschaftlichen Arbeitsmaschine 1 bezeichnet.

Weiter verfügt die landwirtschaftliche Arbeitsmaschine 1 über eine Fahrzeugkabine 31 in der zumindest eine mit einer Anzeigeeinheit 32 versehene Steuer- und Regeleinrichtung 33 angeordnet ist, mittels derer automatisch oder vom Bediener 34 der landwirtschaftlichen Arbeitsmaschine 1 initiiert eine Vielzahl von noch näher zu beschreibenden Prozessen P gesteuert werden können. Die Steuer- und Regeleinrichtung 33 kommuniziert über ein sogenanntes Bussystem 35 in an sich bekannter Weise mit einer Vielzahl von Sensorsystemen 36. Einzelheiten bezüglich der Struktur der Sensorsysteme 36 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird.

Weiter zeigt Fig. 1 eine schematische Darstellung der Anzeigeeinheit 32 der Steuer- und Regeleinrichtung 33 sowie die der Steuer- und Regeleinrichtung 33 zugeordnete und mit der Anzeigeeinheit 32 gekoppelte Recheneinheit 37. Die Recheneinheit 37 ist so beschaffen, dass sie neben den von den Sensorsystemen 36 generierten Informationen 38, externe Informationen 39 und in der Recheneinheit 37 selbst hinterlegte Informationen 40, wie etwa Expertenwissen, zu einer Vielzahl von Ausgangssignalen 41 verarbeiten kann. Die Ausgangssignale 41 sind dabei so beschaffen, dass sie zumindest Anzeigesteuersignale 42 und Arbeitsorgansteuersignale 43 umfassen, wobei erstere die Inhalte der Anzeigeeinheit 32 bestimmen und letztere die Änderung der unterschiedlichsten Arbeitsparameter 44 der Arbeitsorgane 30 der landwirtschaftlichen Arbeitsmaschine 1 bewirken, wobei Pfeil 44 symbolisch für die Dreschtrommeldrehzahl steht. Die Steuer- und Regeleinrichtung 33 mit der ihr zugeordneten Anzeigeeinheit 32 und der Recheneinheit 37 sind Bestandteil des erfindungsgemäßen, noch näher zu beschreibenden Fahrerassistenzsystems 45.

Dem Fahrerassistenzsystem 45 ist erfindungsgemäß ein Prozessoptimierungsmodul 46 zugeordnet, wobei das Prozessoptimierungsmodul 46 vorzugsweise Bestandteil der Recheneinheit 37 ist. Dem Prozessoptimierungsmodul 46 sind ein oder mehrere Prozessmodelle 47 zugeordnet, welche die noch näher zu beschreibenden, in der landwirtschaftlichen Arbeitsmaschine 1 ablaufenden Prozesse P beschreiben. Das einzige oder die mehreren Prozessmodelle 47 werden von Kennlinienfeldern 48 beschrieben, wobei in jedem Kennlinienfeld 48 der Zusammenhang zwischen Qualitätsparametern 49 und Arbeitsparametern 50a..i der landwirtschaftlichen Arbeitsmaschine 1 definiert sind.

Die von dem jeweiligen Prozessmodell 47 beschriebenen Prozesse P können beispielsweise der Ausdruschprozess, der Trennprozess oder der Reinigungsprozess des Erntegutes 5 sein, um hier nur einige Prozesse P beispielhaft zu nennen. Die Qualitätsparameter können beispielsweise die an sich bekannten und daher hier nicht näher beschriebenen Qualitätsparameter "Ausdruschverlust", "Bruchkornanteil", "Abscheideverlust", "Reinigungsverlust", "Dreschwerksbelastung" und "Kraftstoffverbrauch" sein. Die Arbeitsparameter 50a..i der landwirtschaftlichen Arbeitsmaschine umfassen einerseits auf den Erntegutstrom 5 bezogenen Parameter, wie etwa den Erntegutdurchsatz, die in der landwirtschaftlichen Arbeitsmaschine detektierte Schichthöhe des Erntegutstroms 5 und/oder die Feuchte des Erntegutstromes 5. Andererseits umfassen die Arbeitsparameter 50a..i auf die Arbeitsorgane 30 der landwirtschaftlichen Arbeitsmaschine bezogenen Parameter wie die bereits genannte Dreschtrommeldrehzahl 44 und/oder die Drehzahl des der Reinigungseinrichtung 17 zugeordneten Gebläses 16, um hier nur beispielhaft zwei zu nennen. Das in Figur 1 dargestellte Beispiel für ein ein Prozessmodell 47 beschreibendes Kennfeld 48 könnte beispielsweise den Qualitätsparameter 49 "Abscheideverlust" in Abhängigkeit von den Arbeitsparametern Dreschtrommeldrehzahl 44, 50a und der auf den Erntegutstrom 5 bezogenen Schichthöhe 50i beschreiben.

Mit einer derartigen Struktur einer als Mähdrescher 2 ausgeführten landwirtschaftlichen Arbeitsmaschine 1, das beschriebene Fahrerassistenzsystem 45 umfassend, welches vorgesehen und eingerichtet ist, die Arbeitsparameter 44, 50a..i und die Qualitätsparameter 49 des Mähdreschers 2 automatisiert zu überwachen und einzustellen ergibt sich ein Fahrerassistenzsystem 45, welches den Bediener 34 des Mähdreschers 2 bei der Bedienung des Mähdreschers 2 unterstützt. Dies wird zunächst deshalb möglich, da dem Fahrerassistenzsystem 45 ein Kennlinienfelder 48 umfassendes Prozessmodell 47 zugeordnet ist und das Prozessmodell 47 den jeweiligen Qualitätsparameter 49 in Abhängigkeit von Stellgrößen 51, hier den Arbeitsparametern 50a..i, definiert und das Fahrerassistenzsystem 50 in noch näher zu beschreibender Weise eingerichtet ist, in Abhängigkeit von dem jeweiligen Prozessmodell 47 optimierte Arbeitsparameter 50a..i der landwirtschaftlichen Arbeitsmaschine 1 zu ermitteln.

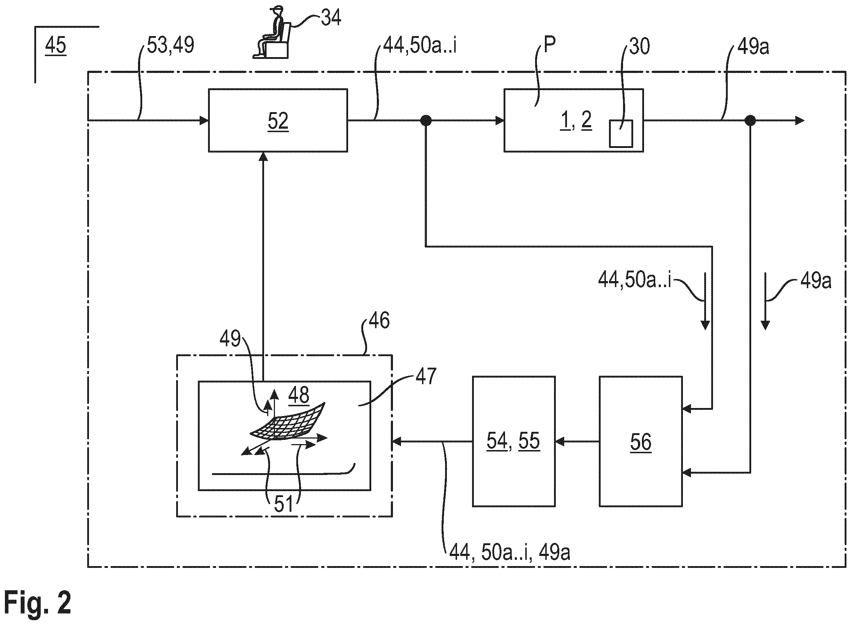

Zum besseren Verständnis der Erfindung werden in Fig. 2 zunächst generelle, aus dem Stand der Technik bekannte Aspekte des Fahrerassistenzsystems 45 im Detail beschrieben. Das Fahrerassistenzsystem 45 optimiert in einem Optimierungsschritt 52 die Arbeitsparameter 44, 50a..i der als Mähdrescher 2 ausgeführten landwirtschaftlichen Arbeitsmaschine 1. Die Optimierung der Arbeitsparameter 44, 55a..i hängt von einer den Optimierungsschritt 52 bestimmenden vorausgewählten Ernteprozessstrategie 53 ab, wobei die Ernteprozessstrategie 53 in der Regel vom Bediener 34 vorgegeben wird und im einfachsten Fall die zu erreichenden Qualitätsparameter 49, wie etwa maximal zulässige Kornverluste oder eine zu erreichende Reinheit der Körner 11, um nur beispielhaft zwei Qualitätskriterien 49 zu nennen, definiert. Die in dem Optimierungsschritt 52 ermittelten optimierten Arbeitsparameter 44, 55a..i werden sodann an den Prozess P übergeben und an den jeweiligen Arbeitsorganen 30 des Mähdreschers 2, etwa eine optimierte Drehzahl 44 einer den Dreschorganen 7 zugeordneten Dreschtrommel, automatisiert eingestellt. Sodann ermittelt das Fahrerassistenzsystem 45 die sich aufgrund einer Anpassung der Arbeitsparameter 44, 55a..i ergebenden Qualitätskriterien 49a.

Sowohl die optimierten Arbeitsparameter 44, 50a..i als auch die ermittelten Qualitätsparameter 49a werden in einem Modelladaptionsschritt 54 an das Prozessoptimierungsmodul 46 übermittelt, wobei in Abhängigkeit der übermittelten Parameter 44, 50a..i, 49a in an sich bekannter Weise das Prozessmodell 47 dann adaptiert wird, wenn das hinterlegte Prozessmodell 47 den tatsächlichen Prozess P nicht mehr hinreichend gut beschreibt. Der aus dem Stand der Technik bekannte Modelladaptionsschritt 54 ist als sogenannte stationäre Modelladaption 55 ausgebildet, bei welcher für die Stellgrößen 51 und die ermittelten Qualitätsparameter 49a in einem Datenvorverarbeitungsschritt 56 zunächst quasistationäre Zustände ermittelt werden. Sodann werden die dem quasistationären Zustand entsprechenden Werte für die Stellgrößen 51 und die ermittelten Qualitätsparameter 49a an den Prozessoptimierungsmodul 46 zur Adaption des Prozessmodells 47 übergeben. Diese aus dem Stand der Technik bekannte Nachführung des Prozessmodells 47 an den realen Prozess P wird im Folgenden als träge Modelladaption 55 bezeichnet, da hierfür stets eine gewisse Einschwingzeit durchlaufen wird, bis das hinterlegte Prozessmodell 47 an den realen Prozess P angepasst ist. Ändern sich den Prozess P beschreibende Bedingungen, wie etwa der Erntegutdurchsatz oder die Feuchtigkeit des Erntegutstromes 5 abrupt und/oder nur kurzzeitig haftet dieser Regelungsstruktur der Nachteil an, dass auf die sich ändernden Bedingungen des Prozesses P nicht hinreichend gut reagiert werden kann, was letztlich dazu führt, dass die durch die gewählte Ernteprozessstrategie 53 vorgegebenen Qualitätskriterien 49 nicht hinreichend gut eingehalten werden können. Hier setzt nun die Erfindung an.

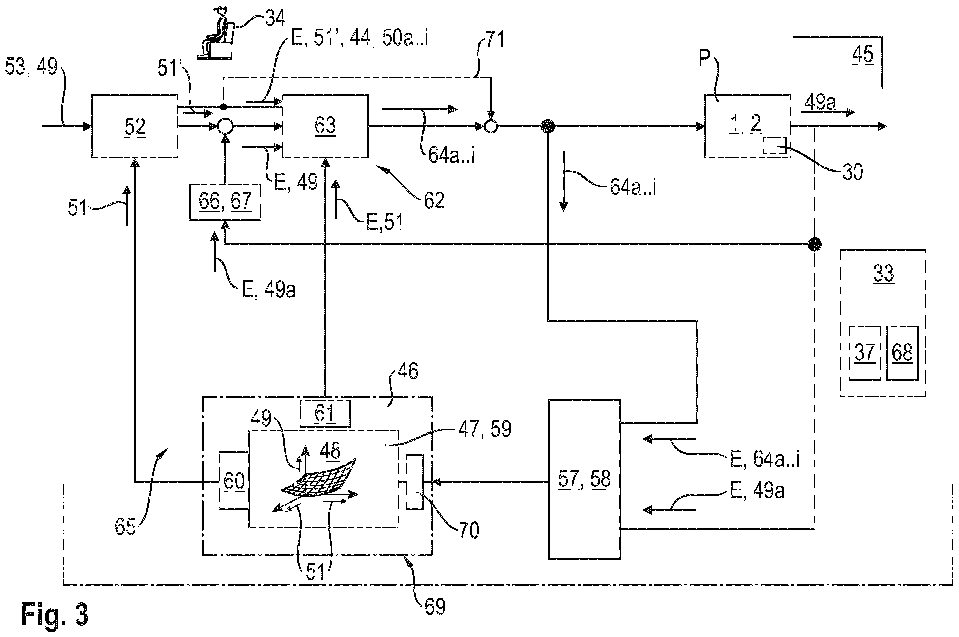

Fig. 3 zeigt nun Details des erfindungsgemäßen Fahrerassistenzsystems 45 mit dem ihm zugeordneten Prozessoptimierungsmodul 46, in welchem das Prozessmodell 47 und die dem Prozessmodel 47 zugeordneten Kennlinienfelder 48 hinterlegt sind, wobei das Prozessmodell 47 den Zusammenhang von Arbeitsparametern 50a..i eines Arbeitsorgans 30, den Stellgrößen 51, und den Qualitätsparametern 49 beschreibt, sodass das vom Fahrerassistenzsystem (45) umzusetzende und noch näher zu erläuternde Optimierungsverfahren (65) als Kennfeldsteuerung (69) ausgebildet ist.

Dem Prozessmodell 47 ist ein Modelladaptionsschritt 57 zugeordnet, der erfindungsgemäß und noch näher zu erläutern als dynamische Modelladaption 58 ausgebildet ist, sodass das hinterlegte Prozessmodell 47 erfindungsgemäß als nichtlineares dynamisches Prozessmodell 59 ausgebildet ist, wobei sich das nichtlineare dynamische Prozessmodell 59 aus einem statischen Prozessmodellanteil 60 und einem dynamischen Prozessmodellanteil 61 zusammensetzt. In Analogie zu dem hinterlegten Prozessmodell 47 stellt auch das nichtlineare dynamische Prozessmodell 59 den Zusammenhang von Arbeitsparametern 50a..i eines Arbeitsorgans 30, den Stellgrößen 51, und den Qualitätsparametern 49 dar.

Die Kennfeldsteuerung 69 ist so eingerichtet und ausgebildet, dass sie die Arbeitsparameter 44, 50a..i der landwirtschaftlichen Arbeitsmaschine 1 und noch näher zu beschreibende Grenzwerte 66 für die Regelkreisstruktur 62 vorgibt, wobei der Regelkreisstruktur 62 ein selbsteinstellender Regler 63 zugeordnet ist und der selbsteinstellende Regler 63 vorgesehen und eingerichtet ist die Qualitätsparameter 49, 49a des Prozesses zu überwachen.

In dem statischen Prozessmodellanteil 60 werden zunächst in einem Optimierungsschritt 52 aus den der gewählten Ernteprozessstrategie 53 zugeordneten Qualitätskriterien 49 und den aus dem Prozessmodell 47 abgeleiteten Stellgrößen 51 optimierte Stellgrößen 51', die Arbeitsparametern 44, 50a..i, ermittelt.

Der dynamische Prozessmodellanteil 61 umfasst eine Regelkreisstruktur 62, einen selbsteinstellenden Regler 63 umfassend. Eingangsgrößen E des selbsteinstellenden Reglers 63 sind zunächst die optimierten Stellgrößen 51', die optimierten Arbeitsparametern 44, 50a..i, sowie die in der gewählten Ernteprozessstrategie 53 definierten Qualitätsparameter 49. Zudem bilden die im Prozess P durch Anwendung der optimierten Arbeitsparameter 44, 50a..i erreichten Qualitätsparameter 49a Eingangsgrößen E des selbsteinstellenden Reglers 63. Weiter werden die in dem Modelladaptionsschritt 57 ermittelten Stellgrößen 51 als weitere Eingangsgrößen E an den selbsteinstellenden Regler 63 übergeben. In dem selbsteinstellenden Regler 63 werden die definierten Qualitätsparameter 49 mit den erreichten Qualitätsparametern 49a verglichen. Weichen der definierte Qualitätsparameter 49 und der jeweils erreichte Qualitätsparametern 49a voneinander ab, werden unter Berücksichtigung des jeweils hinterlegten Prozessmodells 47 dynamisch angepasste Arbeitsparameter 64a..i generiert und in der den Prozess P beschreibenden als Mähdrescher 2 ausgeführten landwirtschaftlichen Arbeitsmaschine 1 an den jeweiligen Arbeitsorganen 30 automatisiert eingestellt. Zugleich werden diese dynamisch angepassten Arbeitsparameter 64a..i auch an den Modelladaptionsschritt 57 übergeben.

Indem das Prozessmodell 47 als dynamisches nichtlineares Prozessmodell 59 in der Weise ausgebildet ist, dass das dynamische nichtlineare Prozessmodell 59 einen statischen Prozessmodellanteil 60 und einen dynamischen Prozessmodellanteil 61 umfasst, wobei zumindest die Stellgrößen 51 im statischen Prozessmodellanteil 60 einen Optimierungsschritt 52 und im dynamischen Prozessmodellanteil 61 eine Regelkreisstruktur 62 durchlaufen, wird sichergestellt, dass sich das Fahrerassistenzsystem 45 und hier speziell die Optimierung der Arbeitsparameter 50a..i schnell an die realen Erntebedingungen, den Prozess P, anpasst und insbesondere schnell auf abrupte Änderungen der Erntebedingungen reagiert. Auf diese Weise bilden der Optimierungsschritt 52 und die Regelkreisstruktur 62 ein Optimierungsverfahren 65, welches dazu vorgesehen und eingerichtet ist, das Prozessmodell 47, 59 in einem Modelladaptionsschritt 57 in der Weise zu adaptieren, dass der dynamische nichtlineare Prozessmodellanteil 61 vorgesehen und eingerichtet ist, aus der Überwachung der Qualitätsparameter 49, 49a und unter Verwendung eines Parameterschätzverfahrens 70 den stationären Prozessmodellanteil (60) des Prozesses (P) zu ermitteln, wobei die eine oder mehreren Stellgrößen 51 und der eine oder die mehreren von der jeweiligen Stellgröße 51 abhängigen Qualitätsparameter 49a im Modelladaptionsschritt 57 die Eingangsgrößen des Optimierungsverfahrens 65 bilden.

Das nichtlineare dynamische Prozessmodell 59, vorzugsweise der dynamische Prozessmodellanteil 61 kann in einer bevorzugten Ausgestaltung als selbstlernendes Prozessmodell ausgebildet sein und das Parameterschätzverfahren 70 vorzugsweise von einem LMN-FIR Modell (Local Model Networks with local Finite Impulse Response Models) gebildet werden

Die beschriebene Regelkreisstruktur 62 ist so beschaffen, dass sie eine dynamische Anpassung des Prozesses P solange bewirkt, bis das hinterlegte Prozessmodell 47, 59 dem Prozess P nachgeführt wurde. Die Nachführung des hinterlegten Prozessmodells 47, 59 wird in diesem Zusammenhang dadurch erreicht, dass die von dem selbsteinstellenden Regler 63 generierten dynamischen Arbeitsparameter 64a..i und die ermittelten Qualitätsparameter 49a als Eingangsgrößen E dem die dynamische Modelladaption 58 bewirkenden Modeladaptionsschritt 57 übergeben werden. Auf diese Weise wird das hinterlegte Modell 47 schrittweise an die Bedingungen des Prozesses P angepasst. Damit die Regelkreisstruktur 62 nur dann eine dynamische Anpassung des Prozesses P bewirkt, wenn die erreichten Qualitätsparameter 49a nicht mehr den in der gewählten Ernteprozessstrategie 53 definierten Qualitätsparametern 49 entsprechen ist weiter vorgesehen, dass den Qualitätsparametern 49, 49a Grenzwerte 66 zugeordnet sind und in einem Prüfschritt 67 zunächst festgestellt wird, ob der erreichte Qualitätsparameter 49a noch innerhalb des für den Qualitätsparameter 49 liegenden Grenzwert 66 liegt oder nicht. Überschreitet der ermittelte Qualitätsparameter 49a den definierten Grenzwerte 66 wird die Regelkreisstruktur 62 aktiviert wohingegen der Eingriff der Regelkreisstruktur 62 in den Prozess P dann unterbleibt, wenn der Grenzwert 66 nicht überschritten ist. Auf diese Weise wird auch sichergestellt, dass die Regelkreisstruktur 62 solange aktiviert bleibt, bis die aus dem nichtlinearen dynamischen Prozessmodell 59 abgeleiteten optimierten Arbeitsparameter 50a..i die Qualitätskriterien 49 des Prozesses P erfüllen.

Damit das beschriebene Optimierungsverfahren 65 effizient genutzt werden kann ist wie beschrieben vorgesehen, dass das Optimierungsverfahren 65 in das der landwirtschaftlichen Arbeitsmaschine 1 zugeordnete Fahrerassistenzsystem 45 integriert ist, wobei das jeweilige Prozessmodell 47, 59 in einer der die Recheneinheit 37 aufnehmenden Steuer- und Regeleinrichtung 33 zugeordneten Speichereinheit 68 des Fahrerassistenzsystems 45 hinterlegt ist, sodass die Recheneinheit 37 dazu vorgesehen und eingerichtet ist mittels des hinterlegten Prozessmodells 47, 58 das Optimierungsverfahren 65 zu betreiben. Das Fahrerassistenzsystem 45 ist wie beschrieben eingerichtet mittels geeigneter Sensorsysteme 36 (Fig.1 ) die Arbeitsparameter 44, 50a..i und zugehörigen Stellgrößen 51 zu ermitteln und zur Verfügung zu stellen.

Damit ist das, das Optimierungsverfahren 65 umsetzende Fahrerassistenzsystem 45 so beschaffen, dass die Kennfeldsteuerung 69 die Arbeitsparameter 44, 50a..i und die Qualitätskriterien 49, 49a aus dem statischen Prozessmodellanteil 60 des das Maschinenverhalten beschreibenden Prozesses P sowie den Benutzervorgaben, den vorgebbaren Ernteprozessstrategien 53 und den technischen Grenzen der landwirtschaftlichen Arbeitsmaschine 1 durch Optimierung abgeleitet. Mittels der erfindungsgemäßen Regelkreisstruktur 62, welcher der selbsteinstellende Regler 63 zugeordnet ist wird die Arbeitsweise der als Mähdrescher 2 ausgeführten landwirtschaftlichen Arbeitsmaschine 1 durch Überwachung der Qualitätsparameter 49, 49a gesteuert. Zudem ermöglicht die Regelkreisstruktur 62 die Adaption des hinterlegten Prozessmodells 47, 58, wobei hier der beschriebenen nichtlineare dynamische Modellanteil 61 der Qualitätsparameter 49, 49a durch Anwendung eines Parameterschätzverfahrens 70 bestimmt und daraus des Prozessmodell 47 des stationären Maschinenverhaltens ermittelt.

Die Kennfeldsteuerung 69 übernimmt somit zwei Aufgaben, nämlich die unmittelbare Vorgabe der Arbeitsparameter 44, 50a..i der Arbeitsorgane 30 und die Vorgabe der Grenzwerte 66 der Regelkreisstruktur 62, wobei der der Regelkreisstruktur 62 zugeordnete selbsteinstellende Regler 63 die Qualitätsparameter 49, 49a überwacht, wobei die Regelkreisstruktur 62 so ausgeführt sein kann, dass der selbsteinstellende Regler entweder als sogenannter Standardregler zum Einhalten eines Sollwertes oder als Grenzlastregler, der sich bei Überschreiten des Grenzwertes 66 aktiviert und sich nach unterschreiten des Grenzwertes 66 wieder deaktiviert beschaffen ist.

Mithin ist das erfindungsgemäße Optimierungsverfahren so beschaffen, dass es einerseits eine adaptive Vorsteuerung 71 des Prozesses P realisiert und zudem eine dynamische Überwachung und Regelung der Qualitätsparameter 49, 49a ermöglicht. Dies bedeutet, dass die Grundeinstellung der Arbeitsparameter 44, 50a..i aus dem statischen Prozessmodellanteil abgeleitet wird und die Einhaltung der vorgegebenen Qualitätsparameter 49, 49a wird durch die Regelkreisstruktur 62 bewirkt, sodass die sich ergebende Regelungsstruktur als adaptive Regelung mit Vorsteuerung ausgebildet ist.

Eine einfache Umsetzung dieses Verfahrens lässt sich dadurch erzielen, dass zunächst mittels des abgeleiteten statischen Prozessmodellanteils 60 und den vom Bediener 34 der landwirtschaftlichen Arbeitsmaschine 1 vorgebbaren Qualitätsparametern 49 die optimierten Arbeitsparameter 44, 50a..i ermittelt werden. Die so ermittelten optimierten Arbeitsparameter 44, 50a..i werden sodann an die Regelkreisstruktur 62 übergeben, um auf Basis der übergebenen Arbeitsparameter 44, 50a..i und den übergebenen Qualitätsparametern 49 optimierte Arbeitsparameter 64a..i zu ermitteln. Die optimierten Arbeitsparameter 64a..i werden sodann an den Arbeitsorganen 30 der landwirtschaftlichen Arbeitsmaschine 1 eingestellt und die sich ergebenden Qualitätskriterien 49a des Prozesses P ermittelt. Im Folgeschritt werden die ermittelten Qualitätsparameter 49a mit den vordefinierten Qualitätsparameters 49 in einem Prüfschritt 67 in Abhängig eines Grenzwertes 66 verglichen, wobei bei Überschreiten des Grenzwertes 66 die Regelkreisstruktur 62 aktiviert wird und die Aktivierung der Regelkreisstruktur 62 dann unterbleibt oder beendet wird, wenn der Grenzwert 66 nicht oder nicht mehr überschritten ist. Ist die Regelkreisstruktur 62 aktiviert werden die von der Regelkreisstruktur 62 ermittelten Arbeitsparameter 64a..i dem jeweiligen Arbeitsorgan 30 vorgegeben.

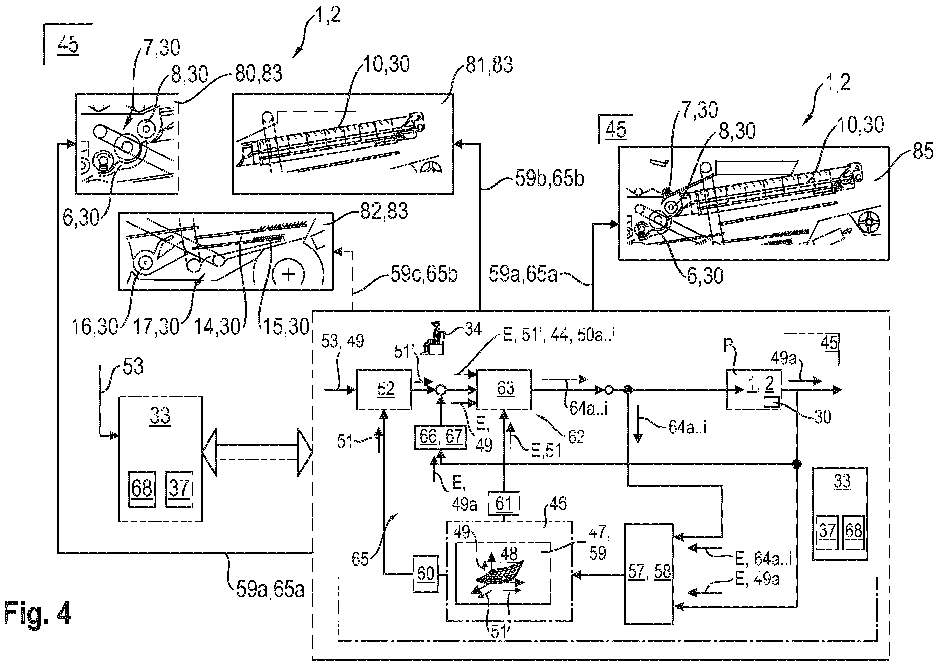

Figur 4 beschreibt nun die Anwendung des beschriebenen dynamischen Prozessmodells 59 in einer als Mähdrescher 2 ausgeführten landwirtschaftlichen Arbeitsmaschine 1 detaillierter. Aus dem Stand der Technik ist es zunächst bekannt, dass das Fahrerassistenzsystem 45 eine sogenannte automatenbasierte Steuerung und Regelung der landwirtschaftlichen Arbeitsmaschine 1 betreibt. In diesem Zusammenhang ist es bekannt, dass die Dreschorgane 7, der ihnen zugeordnete Dreschkorb 6 und die Umlenktrommel 8 zu einem sogenannten Dreschautomat 80 zusammengefasst sind. Weiter ist es bekannt, die Trenneinrichtung 10 als sogenannten Abscheideautomat 81 auszubilden. Zudem sind im Stand der Technik sogenannte Reinigungsautomaten 82 beschrieben, die sich im Wesentlichen aus den Arbeitsorganen 30 einer Reinigungseinrichtung 17 zusammensetzen und zumindest das Gebläse 16 und die Siebebenen 14, 15 umfassen.

Den hier genannten Prozessaggregatautomaten 83, nämlich dem Dreschautomat 680, dem Abscheideautomat 781 und dem Reinigungsautomat 782, ist die grundsätzliche Struktur eines Automaten gemeinsam, nämlich, dass das Fahrerassistenzsystem 45 mit seiner ihm zugeordneten Steuer- und Regeleinrichtung 33 und der dieser zugeordneten Recheneinheit 37 und Speichereinheit 68 dazu eingerichtet ist, einzelne Arbeitsparameter 44, 50a..i der jeweiligen Arbeitsorgane 30 autonom zu ermitteln und dem jeweiligen Arbeitsorgan 30 vorzugeben, wobei die Basis für die Ermittlung der jeweiligen Arbeitsparameter 44, 50a..i die beschriebene benutzerseitige Auswahl von Ernteprozessstrategien 53 ist. Das Fahrerassistenzsystem 45 ist so beschaffen, dass in der Speichereinheit 68 des Fahrerassistenzsystems 45 den jeweiligen Prozessaggregatautomat 83 beschreibende Prozessmodelle 47, 59 hinterlegt sind und die Recheneinheit 37 dazu eingerichtet ist mittels der hinterlegten Prozessmodelle 47, 59 den Prozessaggregatautomat 83 gemäß Figur 3 zu betreiben, wobei der jeweilige Prozessaggregatautomat 83 eingerichtet ist, Arbeitsparameter 44, 50a..i des oder der Arbeitsorgane 30 zu optimieren und die optimierten Arbeitsparameter 50a..i, 64a..i dem jeweiligen Arbeitsorgan 30 vorzugeben. Wie bereits beschrieben ist das Prozessmodell 47 als dynamisches nichtlineares Prozessmodell 59 ausgestaltet. In einer ersten, auf die Prozessaggregatautomaten 83 bezogenen Ausgestaltung sind den Prozessaggregatautomaten Dreschautomat 80, Abscheideautomat 81 und Reinigungsautomat 82 jeweils ein separates dynamisches Prozessmodell 59a..c und zugehöriges Optimierungsverfahren 65a..c zugeordnet, sodass die Arbeitsweise jedes Prozessaggregatautomaten 83 unabhängig von der Arbeitsweise der übrigen Prozessaggregatautomaten 83 optimiert werden kann. In einer weiteren Ausgestaltungsvariante können der Dreschautomat 80 und der Trennautomat 81 zu einem gemeinsamen Abscheideautomat 85 zusammengefasst sein, wobei dem gemeinsamen Abscheideautomat 85 dann ein einziges dynamisches Prozessmodell 59d und zugehöriges Optimierungsverfahren 65d zugeordnet ist, welches sowohl die Arbeitsweise der Dreschorgane 7 und der diesen zugeordneten Arbeitsorgane 30 Dreschkorb 6 und Umlenktrommel 8 sowie der Trenneinrichtung 10 optimiert. Es wäre auch denkbar, dass dem Dreschautomat (80) und dem Abscheideautomat (81) und dem Reinigungsautomat (82) ein gemeinsames Prozessmodell (47) und zugehöriges Optimierungsverfahren (65) zugeordnet ist.

**Bezugszeichenliste:**

| | | | |
|---|---|---|---|
| 1 | Landwirtschaftliche Arbeitsmaschine | 34 | Bediener |
| 2 | Mähdrescher | 35 | Bussystem |
| 3 | Getreideschneidwerk | 36 | Sensorsystem |
| 4 | Schrägförderer | 37 | Recheneinheit |
| 5 | Erntegutstrom | 38 | Interne Information |
| 6 | Dreschkorb | 39 | Externe Information |
| 7 | Dreschorgan | 40 | Information |
| 8 | Umlenktrommel | 41 | Ausgangssignal |
| 9 | Abscheiderotoranordnung | 42 | Anzeigesignal |
| 10 | Trenneinrichtung | 43 | Arbeitsorgansignal |
| 11 | Körner | 44 | Arbeitsparameter |
| 12 | Rücklaufboden | 45 | Fahrerassistenzsystem |
| 13 | Zuführboden | 46 | Prozessoptimierungsmodul |
| 14 | Siebebene | 47 | Prozessmodell |
| 15 | Siebebene | 48 | Kennlinienfeld |
| 16 | Gebläse | 49,49a | Qualitätsparameter |
| 17 | Reinigungseinrichtung | 50a.. i | Arbeitsparameter |
| 18 | Körnerstrom | 51 | Stellgröße |
| 19 | Elevator | 51' | optimierte Stellgröße |
| 20 | Korntank | 52 | Optimierungsschritt |
| 21 | trichterförmiges Gehäuse | 53 | Ernteprozessstrategie |
| 22 | Strohhäcksler | 54 | Modelladaptionsschritt |
| 23 | Zerkleinerungseinrichtung | 55 | stationäre Modelladaption |
| 24 | Stroh | 56 | Datenvorverarbeitungsschritt |
| 25 | Boden | 57 | Modelladaptionsschritt |
| 26 | Gutverteileinrichtung | 58 | dynamische Modelladaption |
| 27 | Restmaterialstrom | 59 | dynamisches Prozessmodell |
| 28 | Restmaterialstrom | 60 | statischer Prozessmodellanteil |
| 29 | Spreuverteiler | 61 | dynamischer Prozessmodellanteil |
| 30 | Arbeitsorgan | 62 | Regelkreisstruktur |
| 31 | Fahrzeugkabine | 63 | selbsteinstellender Regler |
| 32 | Anzeigeeinheit | 64a.. i | dynamischer Arbeitsparameter |
| 33 | Steuer- und Regeleinrichtung | | |
| 65 | | | Optimierungsverfahren |
| 66 | | | Grenzwert |
| 67 | | | Prüfschritt |
| 68 | | | Speichereinheit |
| 69 | | | Kennfeldsteuerung |
| 70 | | | Parameterschätzverfahren |
| 71 | | | adaptive Vorsteuerung |
| 80 | | | Dreschautomat |
| 81 | | | Abscheideautomat |
| 82 | | | Reinigungsautomat |
| 83 | | | Prozessaggregatautomat |
| 84 | | | |
| 85 | | | gemeinsamer Abscheideautomat |
| E | | | Eingangsgröße |
| P | | | Prozess |

## Patentansprüche

1. Landwirtschaftliche Arbeitsmaschine (1) ein Fahrerassistenzsystem (45) umfassend, welches vorgesehen und eingerichtet ist Arbeitsparameter (44, 50a..i) und Qualitätsparameter (49,49a) der landwirtschaftlichen Arbeitsmaschine (1) automatisiert zu überwachen und einzustellen, wobei dem Fahrerassistenzsystem (45) ein Kennlinienfelder (48) umfassendes Prozessmodell (47) zugeordnet ist, sodass das vom Fahrerassistenzsystem (45) umgesetzte Optimierungsverfahren (65) als Kennfeldsteuerung (69) ausgebildet ist und das Optimierungsverfahren (65) als Stellgröße (51) optimierte Arbeitsparameter (44, 50a..i) generiert und das Fahrerassistenzsystem (45) in Abhängigkeit der optimierten Arbeitsparameter (44, 50a..i) die Qualitätsparameter (49,49a) der landwirtschaftlichen Arbeitsmaschine (1) ermittelt
**dadurch gekennzeichnet, dass**
das Prozessmodell (47) als dynamisches nichtlineares Prozessmodell (59) in der Weise ausgebildet ist, dass das dynamische nichtlineare Prozessmodell (59) einen statischen Prozessmodellanteil (60) und einen dynamischen Prozessmodellanteil (61) umfasst, wobei zumindest die Stellgrößen (51) im statischen Prozessmodellanteil (60) einen Optimierungsschritt (52) und im dynamischen Prozessmodellanteil (61) eine Regelkreisstruktur (62) durchlaufen.

2. Landwirtschaftliche Arbeitsmaschine (1) ein Fahrerassistenzsystem (45) umfassend, nach Anspruch 1,
**dadurch gekennzeichnet, dass**
die von dem Prozessmodell (47) definierte Kennfeldsteuerung (69) eingerichtet und ausgebildet ist die Arbeitsparameter (44, 50a..i) der landwirtschaftlichen Arbeitsmaschine (1) und Grenzwerte (66) für die Regelkreisstruktur (62) vorzugeben, wobei der Regelkreisstruktur (62) ein selbsteinstellender Regler (63) zugeordnet ist und der selbsteinstellende Regler (63) vorgesehen und eingerichtet ist die Qualitätsparameter (49, 49a) des Prozesses zu überwachen.

3. Landwirtschaftliche Arbeitsmaschine (1) ein Fahrerassistenzsystem (45) umfassend, nach Anspruch 1,
**dadurch gekennzeichnet, dass**
der Optimierungsschritt (52) und die Regelkreisstruktur (62) ein Optimierungsverfahren (65) bilden, welches dazu vorgesehen und eingerichtet ist das Prozessmodell (47, 59) in einem Modelladaptionsschritt (57) in der Weise zu adaptieren, dass der dynamische nichtlineare Prozessmodellanteil (61) vorgesehen und eingerichtet ist, aus der Überwachung der Qualitätsparameter (49, 49a) und unter Verwendung eines Parameterschätzverfahrens (70) den stationären Modellanteil (60) des Prozesses (P) zu ermitteln, wobei die eine oder mehreren, die optimierten Arbeitsparameter (44, 55a..i, 64a..i) umfassenden Stellgrößen (51, 51') und der eine oder die mehreren von der jeweiligen Stellgröße (51, 51') abhängigen Qualitätsparameter (49,49a) die Eingangsgrößen (E) des Optimierungsverfahrens (65) bilden.

4. Landwirtschaftliche Arbeitsmaschine (1) ein Fahrerassistenzsystem (45) umfassend, nach einem der vorhergehenden Ansprüche,
**dadurch gekennzeichnet, dass**
in dem Optimierungsschritt (52) aus den vom Prozessmodell (47) abgeleiteten Stellgrößen (51) und vorgegebenen Qualitätsparameter (49) optimierte Stellgrößen (51`) ermittelt werden.

5. Landwirtschaftliche Arbeitsmaschine (1) ein Fahrerassistenzsystem (45) umfassend, nach einem der vorhergehenden Ansprüche,
**dadurch gekennzeichnet, dass**
die den selbsteinstellenden Regler (63) umfassende Regelkreisstruktur (62) als Eingangsgrößen (E) die im Optimierungsschritt (52) optimierten Stellgrößen (51, 51'), die vorgegebenen Qualitätsparameter (49) und die in Abhängigkeit von den optimierten Stellgrößen (51, 51') ermittelten Qualitätsparameter (49a) umfasst und dass der selbsteinstellende Regler (63) weiter vorgesehen und eingerichtet ist, aus einem Vergleich der vorgegebenen Qualitätsparameter (49) mit den ermittelten Qualitätsparametern (49a) optimierte Stellgrößen (51', 64a..i) abzuleiten und an den Prozess (P) und den Modelladaptionsschritt (57) der dynamischen Modelladaption (58) zu übergeben.

6. Landwirtschaftliche Arbeitsmaschine (1) ein Fahrerassistenzsystem (45) umfassend, nach Anspruch 5,
**dadurch gekennzeichnet, dass**
der ermittelte Qualitätsparameter (49a) als Eingangsgröße (E) an den Modelladaptionsschritt (57) übergeben wird.

7. Landwirtschaftliche Arbeitsmaschine (1) ein Fahrerassistenzsystem (45) umfassend, nach einem der vorhergehenden Ansprüche,
**dadurch gekennzeichnet, dass**
das Fahrerassistenzsystem (45) eingerichtet ist die optimierten Stellgrößen (51) automatisiert an den Arbeitsorganen (30) der landwirtschaftlichen Arbeitsmaschine (1) einzustellen.

8. Landwirtschaftliche Arbeitsmaschine (1) ein Fahrerassistenzsystem (45) umfassend, nach einem der vorhergehenden Ansprüche,
**dadurch gekennzeichnet, dass**
die Regelkreisstruktur (62) vorgesehen und eingerichtet ist, eine dynamische Anpassung des Prozesses (P) zu bewirken bevor das hinterlegte Prozessmodell (47) dem Prozess (P) nachgeführt wurde.

9. Landwirtschaftliche Arbeitsmaschine (1) ein Fahrerassistenzsystem (45) umfassend, nach einem der vorhergehenden Ansprüche,
**dadurch gekennzeichnet, dass**
das nichtlineare dynamische Prozessmodell (59) den Zusammenhang von Arbeitsparametern (44, 50a..i) eines Arbeitsorgans (30) und den Qualitätsparametern (49,49a) beschreibt.

10. Landwirtschaftliche Arbeitsmaschine (1) eine Kennfeldsteuerung umfassend nach Anspruch 1 und 2,
**dadurch gekennzeichnet, dass**
die den Qualitätsparametern (49,49a) zugeordneten Grenzwerte (66) so strukturiert sind, dass in einem Prüfschritt (67) festgestellt wird, ob der erreichte Qualitätsparameter (49a) noch innerhalb des für den Qualitätsparameter (49) definierten Grenzwertes (66) liegt oder nicht, wobei bei Überschreiten des Grenzwertes (66) die Regelkreisstruktur (62) aktiviert wird und die Aktivierung der Regelkreisstruktur (62) dann unterbleibt oder beendet wird, wenn der Grenzwert (66) nicht oder nicht mehr überschritten ist.

11. Landwirtschaftliche Arbeitsmaschine (1) ein Fahrerassistenzsystem (45) umfassend, nach einem der vorhergehenden Ansprüche,
**dadurch gekennzeichnet, dass**
die Regelkreisstruktur (62) solange aktiviert bleibt, bis die aus dem nichtlinearen dynamischen Modell abgeleiteten optimierten Arbeitsparameter (44, 50a..i) die Qualitätskriterien des Prozesses (P) erfüllen.

12. Landwirtschaftliche Arbeitsmaschine (1) ein Fahrerassistenzsystem (45) umfassend, nach einem der vorhergehenden Ansprüche,
**dadurch gekennzeichnet, dass**
die Arbeitsorgane (30) der landwirtschaftlichen Arbeitsmaschine (1) zu Prozessaggregatautomaten (83) zusammengefasst sind und ein oder mehrere Arbeitsorgane (30) zusammen mit dem Fahrerassistenzsystem (45) einen Prozessaggregatautomat (83) bilden, wobei in einer dem Fahrerassistenzsystem (45) zugeordneten Speichereinheit (68) den jeweiligen Prozessaggregatautomat (83) beschreibende Prozessmodelle (47) hinterlegt sind und die Recheneinheit (37) dazu vorgesehen und eingerichtet ist mittels der hinterlegten Prozessmodelle (47) den Prozessaggregatautomat (83) zu betreiben und der Prozessaggregatautomat (83) eingerichtet ist, Arbeitsparameter (44, 50a..i) des oder der Arbeitsorgane (30) zu optimieren und die optimierten Arbeitsparameter (44, 50a..i) dem jeweiligen Arbeitsorgan (30) vorzugeben.

13. Landwirtschaftliche Arbeitsmaschine (1) eine Kennfeldsteuerung umfassend nach Anspruch 12,
**dadurch gekennzeichnet, dass**
der Prozessaggregatautomat (83) zumindest als Dreschautomat (80) und/oder als Abscheideautomat (81) und/oder als Reinigungsautomat (82) ausgebildet ist und jedem dieser Prozessaggregatautomaten (83) ein Prozessmodell (47) zugeordnet ist.

14. Landwirtschaftliche Arbeitsmaschine (1) eine Kennfeldsteuerung umfassend nach Anspruch 13,
**dadurch gekennzeichnet, dass**
zumindest dem Dreschautomat (80) und dem Abscheideautomat (81) ein gemeinsames Prozessmodell (47) zugeordnet ist, vorzugsweise dem Dreschautomat (80) und dem Abscheideautomat (81) und dem Reinigungsautomat (82) ein gemeinsames Prozessmodell (47) zugeordnet ist.

15. Landwirtschaftliche Arbeitsmaschine (1) ein Fahrerassistenzsystem (45) umfassend, nach Anspruch 3,
**dadurch gekennzeichnet, dass**
das dynamische nichtlineare Prozessmodell (59), vorzugsweise der dynamische Prozessmodellanteil (61) als selbstlernendes Prozessmodell (47) ausgebildet ist und das Parameterschätzverfahren (70) vorzugsweise von einem LMN-FIR Modell (Local Model Networks with local Finite Impulse Response Models) gebildet wird.

16. Landwirtschaftliche Arbeitsmaschine (1) ein Fahrerassistenzsystem (45) umfassend, nach einem der vorhergehenden Ansprüche,
**dadurch gekennzeichnet, dass**
das Optimierungsverfahren (65) in das der landwirtschaftlichen Arbeitsmaschine (1) zugeordnete Fahrerassistenzsystem (45) integriert ist, wobei das jeweilige Prozessmodell (47, 59) in einer der die Recheneinheit (37) aufnehmenden Steuer- und Regeleinrichtung (33) zugeordneten Speichereinheit (68) des Fahrerassistenzsystems (45) hinterlegt ist, sodass die Recheneinheit (37) dazu vorgesehen und eingerichtet ist mittels des hinterlegten Prozessmodells (47, 59) das Optimierungsverfahren (65) zu betreiben und das Fahrerassistenzsystem (45) weiter eingerichtet ist
a.) mittels geeigneter Sensorsysteme (36) die Arbeitsparameter (44, 50a..i) und zugehörigen Stellgrößen (51) zu ermitteln und an das Optimierungsverfahren (65) zu übergeben
b.) das Optimierungsverfahren (65) in einem Modelladaptionsschritt (57) das nichtlineare dynamische Prozessmodell (59) adaptiert und sodann den statischen Prozessmodellanteil (60) ableitet
c.) mittels des abgeleiteten statischen Prozessmodellanteils (60) und den vom Bediener (34) der landwirtschaftlichen Arbeitsmaschine (1) vorgebbaren Qualitätsparametern (49) sodann die optimierten Arbeitsparameter (44, 50a..i) ermittelt werden
d.) die ermittelten optimierten Arbeitsparameter (44, 50a..i) werden an die Regelkreisstruktur (62) übergeben, um auf Basis der übergebenen Arbeitsparameter (44, 50a..i) und den übergebenen Qualitätsparametern (49) optimierte Arbeitsparameter (44, 64a..i) zu ermitteln
e.) die optimierten Arbeitsparameter (44, 64a..i) werden sodann an den Arbeitsorganen (30) der landwirtschaftlichen Arbeitsmaschine (1) eingestellt und die sich ergebenden Qualitätskriterien (49a) des Prozesses (P) werden ermittelt
f.) sodann werden die ermittelten Qualitätsparameter (49a) mit den vordefinierten Qualitätsparameters (49) in einem Prüfschritt (67) in Abhängig eines Grenzwertes (66) verglichen, wobei bei Überschreiten des Grenzwertes (66) die Regelkreisstruktur (62) aktiviert wird und die Aktivierung der Regelkreisstruktur (62) dann unterbleibt oder beendet wird, wenn der Grenzwert (66) nicht oder nicht mehr überschritten ist.
g.) bei aktivierter Regelkreisstruktur (62) werden die von der Regelkreisstruktur (62) ermittelten Arbeitsparameter (44, 64a..i) dem jeweiligen Arbeitsorgan (30) vorgegeben.
